# EUROPÄISCHE PATENTANMELDUNG

(11) **EP 1 001 179 A2**
(43) Veröffentlichungstag der Anmeldung: **17.05.2000**
(21) Anmeldenummer: 99890343.9
(22) Anmeldetag: 27.10.1999
(51) Int. Cl.: F16C 11/06, F16C 11/04

(54) **Kugelbolzen zur schwenkbaren Verbindung zweier Bauteile**

(30) Priorität: 11.11.1998 AT 187598
(71) Anmelder: Hoerbiger Hydraulik GmbH, 86956 Schongau (DE)
(72) Erfinder: Huber, Gerhard, Dipl.-Ing., 87662 Frankenhofen (DE); Schweiger, Klaus, 86989 Steingaden (DE); Hollerbach, Bernhard, 86989 Steingaden (DE)
(74) Vertreter: Laminger, Norbert, Mag.

(57) **Zusammenfassung**

Ein Kugelbolzen (10) zur verschwenkbaren Verbindung eines Bauteils (7) mit einem Kugelkopf (9) an einem anderen Bauteil (8) ist an zumindest einer Seite mit Verbindungsstrukturen zur Anbringung an einem Bauteil versehen. Um die Montage eines Sensors (1) im Verbindungsbereich auch unter beengten und schlecht zugänglichen Verhältnissen auf relativ einfache, schnelle und sichere Art und Weise zu gewährleisten, ist an einer, den Verbindungsstrukturen für den verschwenkbaren Bauteil (7) entgegengesetzten Seite des Kugelbolzens (10) ein Zapfen (13) vorgesehen. Der passende Kugelkopf (9) weist dabei vorzugsweise an einer der Öffnung der pfannenförmigen Aufnahme (12) entgegengesetzten Seite eine Durchbrechung (14) auf.

Vorteilhafterweise sind Kolbenstangen (8) von Arbeitszylindern mit derartigen Kugelköpfen (9) ausgestattet und Arbeitszylinder mit entsprechenden Kolbenstangen (8) versehen.

Ein Befestigungshalter (15) für einen Sensor (1) an der Verbindungsstelle zweier zueinander verschwenkbarer Bauteile (7, 8) ist im Sinne der raschen und einfachen Montage aus einer Halterung (16) für ein Sensorgehäuse (1) und einer davon in Richtung auf einen der beiden Bauteile weg ragenden und ihn zumindest teilweise, vorzugsweise mittels eines hakenartigen Abschnittes, umfassenden Befestigungsgabel (18) aufgebaut.

## Beschreibung

Die Erfindung betrifft einen Kugelbolzen zur verschwenkbaren Verbindung eines Bauteils mit einem Kugelkopf an einem anderen Bauteil, wobei der Kugelkopf an zumindest einer Seite mit Verbindungsstrukturen zur Anbringung an einem Bauteil versehen ist. Sie betrifft weiters einen Kugelkopf, vorzugsweise für die Kolbenstange eines Arbeitszylinders, der vorzugsweise auf der Kolbenstange aufgeschraubt oder in ähnlicher Weise anbringbar und fixierbar ist, mit einer im wesentlichen pfannenförmigen Aufnahme eines Teiles eines Kugelbolzens zur verschwenkbaren Verbindung zweier Bauteile, vorzugsweise eines Hebels und der Kolbenstange eines Arbeitszylinders, als auch eine derartige Kolbenstange für einen druckmittelbetätigten Arbeitszylinder, welche mit dem durch das Druckmittel im Zylinder verschiebbaren Kolben fest verbindbar oder mit diesem einstückig ausgeführt ist. Die Erfindung bezieht sich auch auf einen druckmittelbetätigten Arbeitszylinder mit einem durch das Druckmittel im Zylinder verschiebbaren Kolben und einem Verbindungsmittel des Kolbens mit einem durch den Arbeitszylinder zu bewegenden Bauteil, und eine Betätigungsanordnung für zwei zueinander verschwenkbare Bauteile, vorzugsweise für einen Arbeitszylinder und einen dadurch betätigbaren Hebel, insbesondere einen Hebel eines Scharniers für die verschwenkbare Anbringung eines Heckdeckels, Cabrioverdecks, einer Abdeckklappe für eine Cabrioverdeck od. dgl. Schließlich betrifft die Erfindung auch einen Befestigungshalter für einen Sensor an der Verbindungsstelle zweier zueinander verschwenkbarer Bauteile, vorzugsweise für einen Arbeitszylinder und einen dadurch betätigbaren Hebel, insbesondere den Innenhebel eines Scharniers für die verschwenkbare Anbringung eines Heckdeckels, Cabrioverdecks, einer Abdeckklappe für eine Cabrioverdeck od. dgl.

Bei der Lagebestimmung von zwei zueinander bewegten Bauteilen, gleich auf welchem Gebiet des Maschinenbaus, speziell aber im Falle der Steuerung einer Betätigungsanordnung für bewegliche Teile an Fahrzeugen, insbesonders für Heckdeckel, Cabrio-Verdecke, Verdeck-Abdeckungen od. dgl., in welcher Anordnung der zu bewegende Teil am Fahrzeug mittels zumindest eines Verbindungselementes angelenkt und mit einem steuerbaren Antriebsmittel versehen ist, werden vorteilhafterweise Drehwinkelsensoren eingesetzt. Diese Winkelsensoren erlauben es auch, daß eine Geschwindigkeit des beweglichen Teils oder zumindest eines damit in Verbindung stehenden Verbindungselementes oder des Antriebsmittels überwacht und das Antriebsmittel der beweglichen Bauteile, vorzugsweise ein druckmittelbetätigter Arbeitszylinder gesteuert wird. Die Geschwindigkeit kann dabei über den gesamten Weg der Relativbewegung der verschwenkbar verbundenen Bauteile bzw. den gesamten Öffnungs- oder Schließwinkel des Fahrzeugteils überwacht wird. Für beispielsweise Heckklappen, Motorhauben oder sonstige, um eine Schwenkachse oder mittels einer Scharnieranordnung relativ zueinander bewegliche Bauteile ist es vorteilhaft, wenn eine Drehgeschwindigkeit der beweglichen Teile selbst oder eines Verbindungselementes oder des Antriebsmittels überwacht wird. Diese Drehgeschwindigkeit steht in ursächlichem Zusammenhang mit der Bewegung des bewegten Teils und läßt somit die direkteste und unmittelbarste Ableitung von Steuersignalen zu und bietet eine größere Freiheit für die Wahl der Position des Sensors, wenn die Relativbewegung zweier miteinander verbundener Bauteile überwacht wird. Andererseits kann eine sehr kompakte Anordnung erzielt werden, wenn ein Drehwinkelsensor an oder direkt in einem Gelenk des beweglichen Teils oder der Anlenkung, insbesonders einer Scharnieranordnung, angebracht ist.

Die Aufgabe der vorliegenden Erfindung waren Bauteile und war ein System zur einfachen und raschen Anbringung eines Sensors an der Stelle der verschwenkbaren Verbindung zweier Bauteile, welche die Montage des Sensors im Verbindungsbereich auch unter beengten und schlecht zugänglichen Verhältnissen auf relativ einfache, schnelle und sichere Art und Weise gewährleistet.

Zur Lösung dieser Aufgabe ist erfindungsgemäß vorgesehen, daß ein Kugelbolzen dadurch gekennzeichnet ist, daß an einer, den Verbindungsstrukturen für den verschwenkbaren Bauteil entgegengesetzten Seite ein Zapfen vorgesehen ist. Damit ist ein einfacher Weise eine Anbringungs- und Kopplungsmöglichkeit für Drehwinkelsensoren geschaffen, welche nur auf den besagten Zapfen aufgeschoben werden müssen, wobei durch Verdrehen leicht und relativ rasch die richtige Stellung gefunden werden kann, selbst wenn die Anbringungsstelle wie im Fall einer im Kofferraum untergebrachten Heckdeckelbetätigung od. dgl. nicht gut einsehbar oder zugänglich ist.

Die drehfeste, für die Winkelmessung bedeutende Ankopplung des Sensors an einem der beiden Bauteile wird dadurch einfach und sicher realsiert, daß der Zapfen im Querschnitt gesehen mit zumindest einer Abflachung versehen ist.

Natürlich kann bei einfacher und wirtschaftlicher Herstellung vorgesehen sein, daß der Zapfen einstückig mit dem Kugelbolzen ausgeführt ist. Damit werden auch zusätzliche, Platz benötigende Verbindungsmittel zwischen Kugelbolzen und Zapfen vermieden und die Verbindung optimal stabil.

Gemäß einem weiteren Erfindungsmerkmal wird bei einem eingangs beschriebenen Kugelkopf zur Lösung der gestellten Aufgabe der Kugelkopf an einer der Öffnung der pfannenförmigen Aufnahme entgegengesetzten Seite eine Durchbrechung aufweisen. Damit kann der Sensor durch diese Durchbrechung an den Kugelbolzen angekoppelt werden, vorzugsweise an einen Zapfen dieses Kugelbolzens, der durch die Durchbrechung hindurch ragen kann.

Um eine separate Halterung einzusparen, kann gemäß einer speziellen Ausführungsform eine Halterung für ein Sensorgehäuse vorgesehen sein, wobei die Aufnahme für das Sensorgehäuse vorzugsweise über der Durchbrechung angeordnet ist. Damit kommt der Sensor ganz automatisch in einen Bereich zu liegen, in dem die Ankopplung an den Kugelbolzen erfolgen soll.

Gemäß einer vorteilhaften Ausführungsform ist, wenn einer der beiden verschwenkbar verbundenen Bauteile ein Arbeitszylinder zur Betätigung eines Hebels, etwa eines Scharniers eines Heckdeckels, einer Verdeck-Abdeckung od. dgl. an einem Fahrzeug ist, eine Kolbenstange für einen druckmittelbetätigten Arbeitszylinder, durch einen Kugelkopf gemäß einem der vorhergehenden Absätze gekennzeichnet. Damit werden zusätzliche Bauteile am Arbeitszylinder vermieden, der Aufwand bei Herstellung und Montage vermindert und die Möglichkeit geboten, komplette Antriebsmittel für die beweglichen Teile rasch und einfach einbauen zu können.

Vorteilhafterweise kann der Kugelkopf einstückig mit der Kolbenstange ausgeführt sein.

Die oben genannten Vorteile sind auch bei einem druckmittelbetätigten Arbeitszylinder gegeben, der dadurch gekennzeichnet ist, daß das Verbindungsmittel einen Kugelkopf aufweist, der gemäß einem der vorhergehenden Absätze ausgebildet ist.

Zur vereinfachten Herstellung mit weniger separat gefertigten Bauteilen ist dabei gemäß einer speziellen Ausführungsform vorgesehen, daß die Kolbenstange gemäß einer der zuvor beschriebenen Varianten ausgeführt ist.

Die eingangs gestellte Aufgabe wird erfindungsgemäß auch im Fall einer Betätigungsanordnung für zwei zueinander verschwenkbare Bauteile, dadurch gelöst, daß ein Bauteil mit einem Kugelbolzen verbunden oder einstückig damit ausgeführt ist, der gemäß der zuvor beschriebenen Art und Weise gestaltet ist.

Dabei ist vorteilhafterweise der Arbeitszylinder nach einer der obigen Ausführungsformen ausgebildet.

Um die genannten Vorteile der raschen und einfachen Befestigung eines Sensors im Verbindungsbereich zweier gegeneinander verschwenkbarer Bauteile auch bei schlechter Zugänglichkeit bzw. Einsehbarkeit zu erzielen, selbst wenn keine einstückig an einem der Bauteile vorgesehene Halterung für den Sensor möglich oder erwünscht ist, kann erfindungsgemäß ein Befestigungshalter für einen Sensor vorgesehen und dadurch gekennzeichnet sein, daß der Befestigungshalter aus einer Halterung für ein Sensorgehäuse und einer davon in Richtung auf einen der beiden Bauteile weg ragenden und diesen zumindest teilweise, vorzugsweise mittels eines hakenartigen Abschnittes, umfassenden Befestigungsgabel besteht. Dadurch kann nach dem Aufstecken des Sensors mit vorzugsweise bereits daran befestigter Halterung durch einfaches Verdrehen dieser Anordnung ein Einschnappen des hakenartigen Endes der Befestigungsgabel um den zweiten Bauteil und damit die drehfeste und gegen Abziehen gesicherte Verbindung des Drehsensors hergestellt werden.

Wenn dabei die Befestigungsgabel und der allfällige hakenartige Abschnitt eine in Längsrichtung des umfaßten Bauteils relativ große Dicke aufweisen, ist ein unerwünschtes Verschwenken des Befestigungshalters in eine Stellung unmöglich, in der der Sensor von einem der miteinander verbundenen Bauteile abgekoppelt wird oder sogar aus seiner Halterung fallen kann.

Die Erfindung wird in der nachfolgenden Beschreibung anhand eines auch in den Zeichnungen dargestellten Ausführungsbeispieles näher erläutert. Dabei zeigt die Fig. 1 die Vorderansicht eines für den Einsatz im erfindungsgemäßen System besonders geeigneten Drehsensor, Fig. 2 ist eine Schnittansicht durch einen Verbindungsbereich zweier verschwenkbar verbundener Bauteile mit angebrachtem Drehsensor, Fig. 3 zeigt eine Seitenansicht dieses Verbindungsbereiches und Fig. 4 ist eine perspektivische Ansicht dieses Verbindungsbereiches.

Typischerweise sind die im Rahmen der Erfindung zum Einsatz kommenden Drehsensoren 1 derart aufgebaut, daß in einem Gehäuse 2 eine darin verdrehbare Hohlwelle 3 gelagert ist. Diese Hohlwelle 3 ist vorzugsweise zur sicheren drehfesten Ankopplung an einen der beiden Bauteile, deren relative Verschwenkung zueinander überwacht werden soll, mit einer Abflachung 4 versehen, die zum Zusammenwirken mit einer korrespondierenden Abflachung am anzukoppelnden Bauteil ausgelegt ist. Die Signale des Drehsensors, die beispielsweise durch Ableitung nach der Zeit auch für die Ermittlung der Drehgeschwindigkeit der beiden Bauteile relativ zueinander herangezogen werden können, werden über im Verbindungsteil 5 des Gehäuses 2 vorhandene Anschlüsse abgeleitet. Bohrungen 6 im Gehäuse 2 dienen der Anbringung am zweiten der beiden verschwenkbaren Bauteile, der nicht mit der Drehwelle 3 gekoppelt ist.

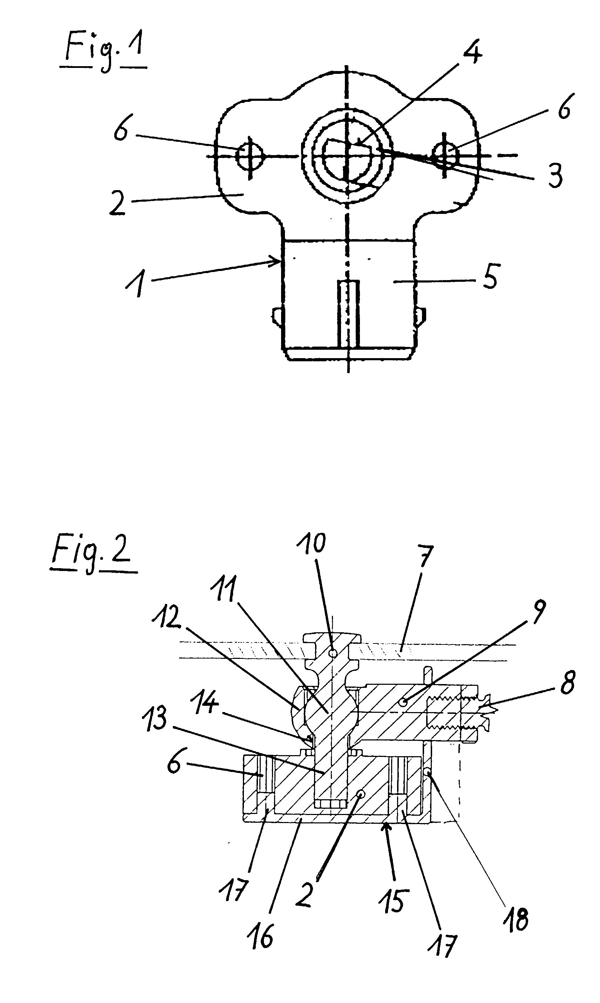

In Fig. 2 ist als Beispiel für den Einsatz des erfindungsgemäßen Systems ein Verbindungsbereich zwischen einem Innenhebel 7 eines Scharniers für an einem Fahrzeug beweglich angelenkte Bauteile und dem zugehörigen Antriebsmittel dargestellt. Der bewegliche Bauteil am Fahrzeug kann ein Teil eines Cabrio-Verdecks sein, aber auch eine Abdeck-Klappe dafür, ein Heckdeckel, eine Motorhaube, eine Tür od. dgl., und das Antriebsmittel wird in den meisten Fällen ein hydraulischer Arbeitszylinder sein, dessen Kolben vorzugsweise über eine Kolbenstange 8 mit einem Kugelkopf 9 auf den Innenhebel 7 einwirkt, der dazu vorzugsweise mit einem Kugelbolzen 10 verbunden ist. Der Innenhebel 7 kann selbstverständlich einen Kugelbolzen auch direkt angeformt haben und einstückig damit ausgeführt sein, ebenso wie die Kolbenstange 8 oder jedes andere Verbindungsmittel zwischen Kolben und Innenhebel 7 auch einstückig mit beispielsweise dem Kugelkopf 9 ausgeführt sein kann. In Fig. 2 ist allerdings die vielseitigere Variante mit jeweils separat angefertigten und dann miteinander verbundenen Teilen dargestellt, wobei der Kugelkopf 9 auf der Kolbenstange 8 aufgeschraubt und darauf mittels herkömmlicher Mittel fixiert ist.

Der Kugelbolzen 10 ist über seinen im wesentlichen kugelförmigen Teil 11, der in der pfannenartige Aufnahme 12 des Kugelkopfes 9 zu liegen kommt und die verschwenkbare Verbindung ergibt, durch einen Zapfen 13 verlängert, der vorzugsweise an der Seite des kugelförmigen Teils 11 vorgesehen ist, der der Verbindungsstruktur mit dem Innenhebel 7 gegenüber liegt. Dieser Zapfen 13 im Querschnitt gesehen an zumindest einer Seite mit einer Abflachung versehen, die der Abflachung 4 der Hohlwelle 3 des Drehsensors 1 entspricht und somit die drehfeste Ankopplung gewährleistet. In der pfannenförmigen Aufnahme 12 des Kugelkopfes 9 ist dabei eine Durchbrechung 14 ausgearbeitet, durch welche der Zapfen 13 hindurchgeführt werden kann und deren Öffnungsdurchmesser und Querschnitt die Verschwenkung der verbundenen Bauteile 7, 8 gegeneinander nicht behindert.

Der Drehsensor 1 wird in der auf den Zapfen 13 aufgeschobenen Stellung durch einen Befestigungshalter 15 gehalten, der an der Rückseite des Drehsensors 1 mit einem im wesentlichen flachen Abschnitt 16 vorzugsweise flächig anliegt. Der flache Abschnitt 16 weist an den Stellen der Bohrungen 6 zapfenartige Vorsprünge 17 auf, die in diese Bohrungen 6 eingreifen und derart den Befestigungshalter 15 und den Sensor 1 verdrehsicher zusammenhalten. Eine auf den Kugelkopf 8 hin ragende Befestigungsgabel 18 geht im wesentlichen rechtwinkelig vom flachen Abschnitt 16 aus und umfaßt mit ihrem hakenartig geöffneten Endabschnitt den Kugelkopf 8. Die Öffnung des hakenartigen Endabschnittes der Befestigungsgabel 18 könnte allenfalls parallel zu deren Längsachse orientiert sein, ist aber vorzugsweise senkrecht dazu ausgerichtet. Damit ist ein einfaches Abziehen des Befestigungshalters 15 und des Drehsensors 1 verhindert und die Montage durch einfaches Aufstecken auf den Zapfen 13 sowie Verdrehen der Anordnung um die Achse der Hohlwelle 3 des Drehsensors 1 (wie weiter unten noch genauer erläutert wird) möglich. Dabei ist eine Fixierung der Befestigungsgabel 18 durch eine Rastverbindung, allenfalls auch alternativ oder zusätzlich durch weitere, vorzugsweise wieder lösbare Verbindungsmittel wie Schrauben, Splinte od. dgl. gegeben, sodaß das Gehäuse 2 des Drehsensors 1 sicher mit dem Kugelkopf 8 und die Drehwelle 3 sicher mit dem Zapfen 13 des Kugelbolzens 10 gekoppelt sind. Auch könnte eine nicht mehr zerstörungslos öffenbare Sicherung an der Befestigungsgabel 18 gegen Ablösen vom Kugelkopf 8 vorgesehen sein, ebenso wie etwa ein über der Öffnung des hakenartigen Endabschnittes verschwenkbarer und auf der Befestigungsgabel 15 selbst einschnappender oder durch zusätzliche Verbindungsmittel fixierbarer Teil, beispielsweise ein Bügel od. dgl. Zusätzlich oder alternativ könnten auch andere Verbindungsmittel wie Schrauben, Nieten od. dgl. zwischen Befestigungshalter 15 und Sensor 1 vorgesehen sein, könnte eine Verbindung durch Verkleben, Verschweißen od. dgl. vorgenommen sein oder könnte die Befestigungsgabel 18 auch direkt am Gehäuse 2 des Drehsensors 1 angebracht oder einstückig mit diesem ausgeführt sein. Bei Ausführung des Befestigungshalters 15 aus Kunststoff könnten einige der oben erwähnten Teile auch an diesem direkt angespritzt sein.

Durch die Erhaltung der Verdrehbarkeit um die Längsachse des Kugelkopfes 9 aufgrund der Rastverbindung anstelle einer drehfesten Verbindung zwischen Befestigungsgbel 19 und Kugelkopf 9 ist weiterhin die im Prinzip allseitige Beweglichkeit im Gelenksbereich gewährleistet, welche den Ausgleich von Toleranzen und nicht vollständig geradlinigen Bewegungen bzw. Bewegungen nur in einer Ebene gestattet.

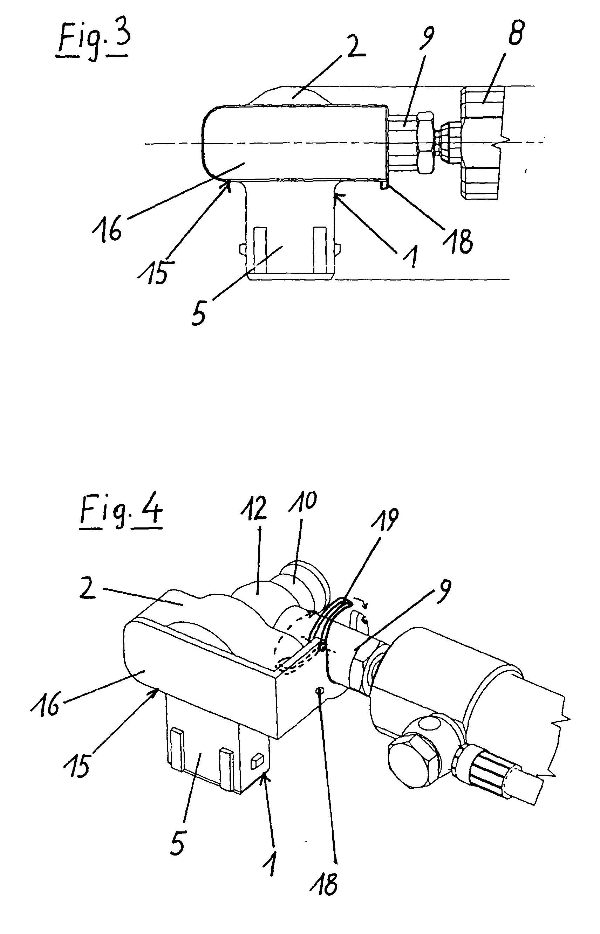

In Fig. 3 ist der Verbindungsbereich zwischen Kolbenstange 8 des Arbeitszylinders und dem Kugelbolzen 10 in der Seitenansicht dargestellt. Der flache Abschnitt 16 des Befestigungshalters 15 läßt den Verbindungsteil 5 des Drehsensors 1 leicht zugänglich und mit Leitungen zur Steuereinheit einfach verbindbar frei.

Die Rastverbindung zwischen der Befestigungsgabel 18 des Befestigungshalters 15 für den Drehsensor 1 und dem Kugelkopf 9 der Kolbenstange 8 des Arbeitszylinders ist nochmals ganz deutlich in der perspektivischen Ansicht der Fig. 4 zu erkennen. Diese Rastverbindung läßt auch eine ganz einfache und rasche Montage des Drehsensors 1 zu. So wird zuerst der Drehsensor 1, falls nicht selbst bereits mit einer Befestigungsgabel 18 versehen, mit dem Befestigungshalter 15 verbunden. Beim Zusammenbau von Innenhebel 7, Kugelbolzen 10 mit Zapfen 13 und dem Arbeitszylinder mit dem Kugelkopf 9 mit Durchbrechung 14 am Ende seiner Kolbenstange 8 ist der Zapfen 13 bereits durch diese Durchbrechung 14 hindurchgeführt worden und ragt an der der pfannenartigen Ausnehmung im wesentlichen gegenüberliegenden Seite aus dem Kugelkopf 9 hervor. Die Anordnung aus Drehsensor 1 und Befestigungshalter 15 wird nun derart auf den Zapfen 13 aufgeschoben, daß die Befestigungsgabel 18 nicht mit dem Kugelkopf 9 kollidiert, wobei die genaue Stellung durch leichtes Verdrehen des Gehäuses 2 des Sensors 1 gesucht werden kann, in der die Abflachungen der Drehwelle 3 des Sensors 1 und jener des Zapfens 13 übereinstimmen. Dann wird die Anordnung Sensor 1 und Befestigungshalter 15 in Richtung der offenen Ausnehmung der Befestigungsgabel 18 gedreht, bis diese um den Kugelkopf 9 einrastet. Allenfalls kann anschließend noch eine Sicherung durch zusätzliche Schrauben, Splinte od. dgl., aber auch beispielsweise durch den dargestellten, in eine hakenartige Ausnehmung an der Befestigungsgabel 18 einrastenden, verschwenkbaren Bügel 19 stattfinden. Der Bügel 19 liegt, um den Montagevorgang nicht zu behindern, beim Aufschieben des Drehsensors 1 ganz flach zurückgeschlagen auf der Befestigungsgabel 18 auf. Der geschilderte Vorgang bedarf keiner speziellen Arbeiten und kann auch rasch und sicher an unzugänglichen oder schwer einsehbaren Stellen vorgenommen werden. Danach ist sowohl die radiale als auch axiale Haltefunktion gewährleistet, ebenso wie die sichere Kopplung des Drehsensors 1 mit beiden gegeneinander verschwenkbaren Bauteilen.

Um eine Verbiegung der Befestigungsgabel 18 zu verhindern und so ein ungewolltes Entkoppeln des Drehsensors 1 von zumindest einem der beiden Bauteile zu verhindern, ist die Befestigungsgabel vorzugsweise 18 relativ dick ausgeführt und liegt über eine große axiale Länge am Kugelkopf 9 an.

## Patentansprüche

1. Kugelbolzen zur verschwenkbaren Verbindung eines Bauteils mit einem Kugelkopf an einem anderen Bauteil, wobei der Kugelkopf an zumindest einer Seite mit Verbindungsstrukturen zur Anbringung an einem Bauteil versehen ist, dadurch gekennzeichnet, daß an einer, den Verbindungsstrukturen für den verschwenkbaren Bauteil (7) entgegengesetzten Seite ein Zapfen (13) vorgesehen ist.

2. Kugelbolzen nach Anspruch 1, dadurch gekennzeichnet, daß der Zapfen (13) im Querschnitt gesehen mit zumindest einer Abflachung versehen ist.

3. Kugelbolzen nach Anspruch 1, dadurch gekennzeichnet, daß der Zapfen (13) einstückig mit dem Kugelbolzen (10) ausgeführt ist.

4. Kugelkopf, vorzugsweise für die Kolbenstange eines Arbeitszylinders, der vorzugsweise auf der Kolbenstange aufgeschraubt oder in ähnlicher Weise anbringbar und fixierbar ist, mit einer im wesentlichen pfannenförmigen Aufnahme eines Teiles eines Kugelbolzens zur verschwenkbaren Verbindung zweier Bauteile, vorzugsweise eines Hebels und der Kolbenstange eines Arbeitszylinders, dadurch gekennzeichnet, daß der Kugelkopf (9) an einer der Öffnung der pfannenförmigen Aufnahme (12) entgegengesetzten Seite eine Durchbrechung (14) aufweist.

5. Kugelkopf nach Anspruch 4, dadurch gekennzeichnet, daß eine Halterung für ein Sensorgehäuse vorgesehen ist, wobei die Aufnahme für das Sensorgehäuse vorzugsweise über der Durchbrechung (14) angeordnet ist.

6. Kolbenstange für einen druckmittelbetätigten Arbeitszylinder, welche mit dem durch das Druckmittel im Zylinder verschiebbaren Kolben fest verbindbar oder mit diesem einstückig ausgeführt ist, dadurch gekennzeichnet, daß sie mit einem Kugelkopf (9) gemäß Anspruch 4 oder 5 versehen ist.

7. Kolbenstange nach Anspruch 6, dadurch gekennzeichnet, daß der Kugelkopf (9) einstückig mit der Kolbenstange (8) ausgeführt ist.

8. Druckmittelbetätigter Arbeitszylinder mit einem durch das Druckmittel im Zylinder verschiebbaren Kolben und einem Verbindungsmittel des Kolbens mit einem durch den Arbeitszylinder zu bewegenden Bauteil, dadurch gekennzeichnet, daß das Verbindungsmittel einen Kugelkopf (9) aufweist, der gemäß Anspruch 4 oder 5 ausgebildet ist.

9. Druckmittelbetätigter Arbeitszylinder mit einem durch das Druckmittel im Zylinder verschiebbaren Kolben und mit einer Kolbenstange mit Kugelkopf, welche Kolbenstange fest mit dem Kolben verbindbar oder mit dem Kolben einstückig ausgeführt ist, dadurch gekennzeichnet, daß die Kolbenstange (8) gemäß Anspruch 6 oder 7 ausgeführt ist.

10. Betätigungsanordnung für zwei zueinander verschwenkbare Bauteile, vorzugsweise für einen Arbeitszylinder und einen dadurch betätigbaren Hebel, insbesondere einen Hebel eines Scharniers für die verschwenkbare Anbringung eines Heckdeckels, Cabrioverdecks, einer Abdeckklappe für eine Cabrioverdeck od. dgl., dadurch gekennzeichnet, daß ein Bauteil (7) mit einem Kugelbolzen (9) gemäß einem der Ansprüche 1 bis 3 verbunden oder einstückig damit ausgeführt ist.

11. Betätigungsanordnung nach Anspruch 10, dadurch gekennzeichnet, daß der Arbeitszylinder nach einem der Ansprüche 8 oder 9 ausgeführt ist.

12. Befestigungshalter für einen Sensor an der Verbindungsstelle zweier zueinander verschwenkbarer Bauteile, vorzugsweise für einen Arbeitszylinder und einen dadurch betätigbaren Hebel, insbesondere den Innenhebel eines Scharniers für die verschwenkbare Anbringung eines Heckdeckels, Cabrioverdecks, einer Abdeckklappe für eine Cabrioverdeck od. dgl., dadurch gekennzeichnet, daß der Befestigungshalter (15) aus einer Halterung (16) für ein Sensorgehäuse (2) und einer davon in Richtung auf einen der beiden Bauteile weg ragenden und diesen zumindest teilweise, vorzugsweise mittels eines hakenartigen Abschnittes, umfassenden Befestigungsgabel (18) besteht.

13. Befestigungshalter nach Anspruch 12, dadurch gekennzeichnet, daß die Befestigungsgabel (18) und der allfällige hakenartige Abschnitt eine in Längsrichtung des umfaßten Bauteils (9) relativ große Dicke aufweisen.
